# EUROPEAN PATENT APPLICATION

(11) **EP 0 707 280 A2**
(43) Date of publication of application: **17.04.1996**
(21) Application number: 95110675.6
(22) Date of filing: 07.07.1995
(51) Int. Cl.: G06K 11/16

(54) **Sensor for coordinate input device**

(30) Priority: 14.10.1994 JP 249236/94
(71) Applicant: HOSIDEN CORPORATION, Osaka-fu (JP)
(72) Inventor: Komatsu, Yasuhiro, Osaka-shi, Osaka-fu (JP)
(74) Representative: Fleuchaus, Leo, Dipl.-Ing.

(57) **Abstract**

A sensitive operation unit for a sensitive coordinate input device according to the invention adopts a method of moving a cursor on a display screen by pressing with an operator's finger four electrode faces corresponding to the X axis and the Y axis of the display screen via an electrically insulating layer, or by moving the operator's finger on the electrically insulating layer. The sensitive operation unit includes an electrode plate 3 having four electrode faces 31, 32, 33, and 34 which are separated in a circumferential direction. In the electrode plate 3, an area surrounded by a rim member 2 serves as a sensitive operation area 10. The electrode plate 3 may be formed to have a flat shape or a dome shape. The rim member 2 is preferably provided with a slope face 22. The rim member 2 is useful for improving the operability.

## Description

### Background of the Invention

### 1. Field of the Invention

The present invention relates to a sensitive operation unit for a sensitive coordinate input device in which an electrode plate having four electrode faces is depressed by an operator with the operator's finger via an electrically insulating layer or the operator moves the finger on the electrically insulating layer, whereby a coordinate signal can be varied based on variations of electrostatic capacitances between the operator's finger and the four electrode faces.

### 2. Description of the Prior Art

Japanese National Patent Publication No. 4-507316 (WO 91/03039) describes a sensitive coordinate input device. The sensitive coordinate input device has a function which is similar to that implemented by a mouse functioning as a versatile coordinate input device. According to the sensitive coordinate input device, the cursor position on a display screen can be varied based on the position of a finger of the operator. The publication may disclose that signals output in accordance with variations of electrostatic capacitances between the operator's finger and a number of electrode faces are synthesized so that the output signal is converted into a signal indicative of a cursor position on the display screen. However, the publication discloses nothing about countermeasures for improving the operability of such a sensitive coordinate input device, and reducing the size and thickness of the device.

### Summary of the Invention

The present invention has been conducted in view of the aforementioned circumstances.

It is an object of the present invention to improve the structure of a sensitive operation unit for a sensitive coordinate input device, thereby enhancing the operability of the sensitive coordinate input device.

It is another object of the present invention to improve the structure of a sensitive operation unit for a sensitive coordinate input device, thereby easily realizing a reduced size and a reduced thickness of the sensitive coordinate input device.

In order to attain these objects, the sensitive operation unit for a sensitive coordinate input device according to the invention comprises:
an electrode plate having four electrode faces which are separated in a circumferential direction and electrically insulated from each other, the electrode faces being butted each other in a center portion of the electrode plate;
an electrically insulting layer overlaid on the electrode plate so as to cover the four electrode faces, the surface of the electrically insulating layer being to be touched with a finger of an operator; and
a rim member provided with a slope face which forms a sensitive operation area of the four electrode faces in a peripheral portion of the electrode plate on which the electrically insulating layer is overlaid, the slope face being upgrade toward an outer peripheral side and being continuous to the sensitive operation area.

Generally, in the sensitive operation unit in the sensitive coordinate input device having the construction described above, among the four electrode faces separated in a circumferential direction, predetermined two electrode faces at alternate positions are assigned a plus coordinate and a minus coordinate, respectively, in the X-axis direction of a display screen. The remaining two electrode faces are assigned a plus coordinate and a minus coordinate, respectively, in the Y-axis direction of the display screen. The center portion of the electrode plate in which the four electrode faces are butted each other is assigned an origin, i.e., the coordinates [0, 0].

In the case where the operator operates the sensitive operation unit with the operator's finger in such a condition, it is advantageous that the position of the origin and the sensitive operation area can be clearly recognized without requiring for the operator to see them (hereinafter, referred to as a blind operability). Moreover, it is desired that any probability that the finger is accidentally slipped off from the sensitive operation area can be eliminated (hereinafter, referred to as a slip-off preventing property), and that an operability for allowing the finger to be repetitively moved within the sensitive operation area (hereinafter, referred to as a finger repetitive operability) is excellent. If these properties are superior, the operability of the sensitive operation unit is judged to be good.

In terms of the above-mentioned properties, according to the invention in which the sensitive operation area is formed by the rim member, the operator can easily recognize the limit edge of the sensitive operation area when the operator's finger hits the rim member, so that the blind operability is improved. Since the rim member has a slope face which is formed continuously to the sensitive operation area and is upgrade toward the outer peripheral side, the blind operability is further improved, and also the repetitive movement of the finger can easily be performed, because the returning movement of the finger to the sensitive operation area after the finger is slipped on the slope face is naturally supported by the upgrade slope face. Accordingly, a good finger repetitive operability is attained. The slope face is useful for preventing the finger from being slipped off from the sensitive operation area, so that the slip-off preventing property is also improved.

In the invention, the rim member is desirably protruded from a case incorporating a wiring board on which various electric components and electronic components are mounted. With such a construction, the whole structure can be flat. This is useful for reducing the size and the thickness of the sensitive operation unit.

The sensitive operation unit for a sensitive coordinate input device according to another invention comprises:
an electrode plate having four electrode faces which are separated in a circumferential direction and electrically insulated from each other, the electrode faces being butted each other in a center portion of the electrode plate, a surface of the electrode plate and the four electrode faces being protruded in a dome shape from a peripheral portion to the center portion;
an electrically insulting layer overlaid on the electrode plate so as to cover the four electrode faces, a surface of the electrically insulating layer being to be touched with a finger of an operator; and
a rim member which forms a sensitive operation area of the four electrode faces in the peripheral portion of the electrode plate on which the electrically insulating layer is overlaid.

According to the structure of the sensitive operation unit in the sensitive coordinate input device having the above-described construction, the top point of the electrode plate which is protruded in a dome shape is assigned an origin of coordinates, so that the origin can easily be recognized by the touch with a finger. In addition, when the finger hits the rim member, the operator can easily recognize the limit edge of the sensitive operation area, so that the blind operability is improved.

In the invention, preferably, the four electrode faces are butted each other so that, when the operator puts the finger on the center portion of the electrode plate having the four electrode faces, the finger overlaps the four electrode faces via the electrically insulating layer, and the sensitive operation area is formed in a size enabling an extra area to be formed around the finger for allowing the finger to move. With such a construction, the range in which the cursor can be moved on the display screen can easily be widened, and the cursor can be moved on the display screen based on the variation of electrostatic capacitances by the change of depressing pressure of the finger against the electrode faces. Moreover, it is possible to easily perform the operation for moving the cursor by a small distance on the display screen by pressing the electrically insulating layer with the finger or by tilting the finger on the electrically insulating layer.

In each of the inventions, a case to which the rim member is provided may incorporate a wiring board on which various electric components and electronic components are mounted, and a depression open/close switch, the connection condition of the switch being alternatingly switched over between an open state and a close state by each depression of an operation portion, and the electrode plate covered by the electrically insulating layer is accommodated in the case in a state where the electrode plate is capable of being depressed into and restored from the depression with respect to the case and always elastically urged along a restoring direction, depression and restoring operations of the operation portion of the switch being interlocked with depression and restoring operations of the electrode plate. With such a construction, the open/close state of the depression open/close switch can be changed by depressing the electrode plate with a finger, so that the determining operation of the cursor position on the display screen can be performed directly by the finger which is used for controlling the movement of the cursor (a pointer function).

The sensitive operation unit for a sensitive coordinate input device according to a further invention comprises:
a sphere which is rotatably held in a base member;
an electrode plate having an opening which is fitted to the sphere to protrude a part of the sphere on a surface side, the electrode plate having four electrode faces which are separated in a circumferential direction and electrically insulated from each other, the electrode faces being butted each other in a periphery of the opening; and
an electrically insulting layer having an opening which is fitted to the sphere to protrude a part of the sphere on the surface side, the electrically insulating layer being overlaid on the electrode plate so as to cover the four electrode faces, a surface of the electrically insulating layer being to be touched with a finger of an operator.

With such a construction, the action of the finger for rotating the sphere results naturally in the action for moving the finger on the electrically insulating layer. Moreover, the sphere is rotated by the movement of the finger, so that the operation for moving the finger in a very small area can be smoothly and easily performed. Since the sphere is protruded from the opening of the electrically insulating layer, the origin of coordinates can easily be recognized by sensorially recognizing the sphere with the finger.

In the invention, it is preferable that a peripheral portion of the opening of the electrically insulating layer which is fitted to the sphere overlaps the surface of the sphere. With such a construction, the peripheral portion of the opening of the electrically insulating layer which overlaps the surface of the sphere is useful for preventing the sphere from falling out of the base member.

In addition, it is possible to dispose a rim member for forming a sensitive operation area of the four electrode faces in a peripheral portion of the electrode plate which is covered by the electrically insulating layer. In such a case, it is preferable that the rim member has a slope face which is upgrade toward an outer peripheral side and is continuous to the sensitive operation area. With such a construction, the blind operability is improved, and also excellent finger repetitive operability and slip-off preventing property can be attained.

According to the inventions included in the present application, the blind operability, the slip-off preventing property, and the finger repetitive operability when the sensitive operation unit is operated by the operator with the finger are improved, so that a sensitive operation unit for a sensitive coordinate input device which has superior operabilities is provided.

Advantages and effects of the invention included in the present application will be more clearly understood by embodiments described below.

### Brief Description of the Drawings

Fig. 1 is a schematic perspective view showing a sensitive operation unit for a sensitive coordinate input device of a first embodiment of the invention;
Fig. 2 is a diagram illustrating a sensitive operation area formed in the sensitive operation unit of the first embodiment;
Fig. 3 is a schematic side view in which a part of the sensitive operation unit of the first embodiment is broken and shown in an enlarged manner;
Fig. 4 is a schematic perspective view of a sensitive operation unit A of a third embodiment;
Fig. 5 is a schematic perspective view of a sensitive operation unit of a fourth embodiment;
Fig. 6 is a view illustrating an operation of the sensitive operation unit of the fourth embodiment;
Fig. 7 is a schematic vertical cross section view of a sensitive operation unit of a second embodiment;
Fig. 8 is a vertical cross section view of a sensitive operation unit of a fifth embodiment; and
Fig. 9 is a plan view of the sensitive operation unit of the fifth embodiment.

### Detailed Description of the Preferred Embodiments

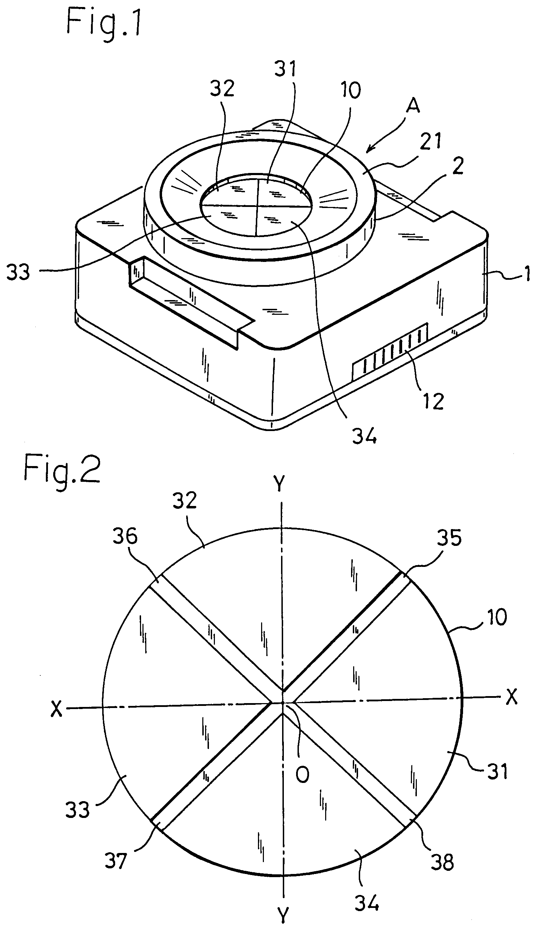

A first embodiment will be described with reference to Figs. 1 to 3.

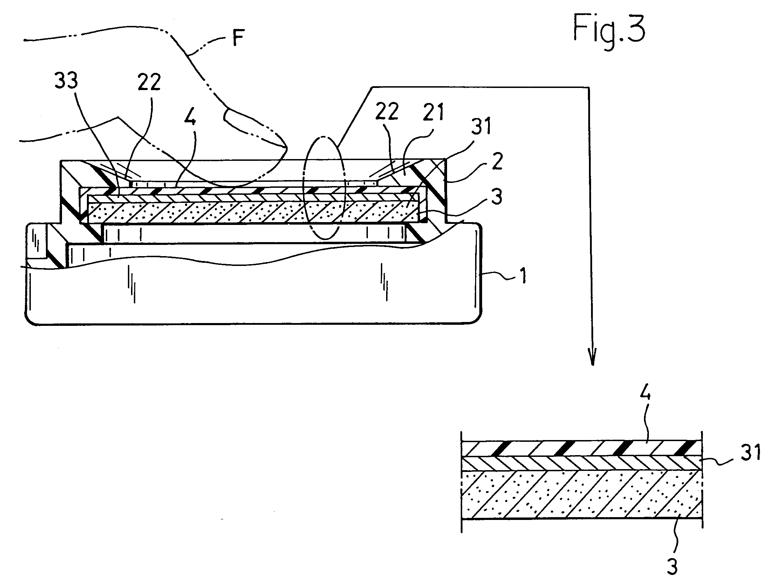

In Fig. 1, 1 designates a hollow case made of a synthetic resin molded body. The case 1 takes a rectangular parllelepiped form having a width and a length of 33 mm, respectively, and a height of about 13 mm. The case 1 incorporates a wiring board (not shown) on which various electric components and electronic components for forming required circuits such as a signal synthesizing circuit, and an output circuit are mounted. On a side face of the case 1, a terminal 12 for interface is provided. From the upper face of the case 1, a rim member 2 having a low columnar shape is integrally protruded. As shown in Fig. 3, the rim member 2 incorporates a circular electrode plate 3. A ring-shaped protrusion part 21 which is integrated with the rim member 2 is superposed on a peripheral portion of the electrode plate 3. The protrusion part 21 forms a circular sensitive operation area 10 in the electrode plate 3.

The electrode plate 3 comprises four electrode faces 31, 32, 33, and 34 which are separated in a circumferential direction and electrically insulated from each other. Each of the electrode faces 31 to 34 has a sector form which becomes gradually narrower as moving toward the center portion of the electrode plate 3. The electrode faces 31 to 34 are arranged in such a manner that they are butted each other in the center portion. Between the four electrode faces 31 to 34, gaps 35, 36, 37, and 38 for electric insulation are ensured. An electrically insulating sheet 4 is overlaid on the electrode plate 3 so as to cover the four electrode faces 31 to 34. The operator presses the electrode faces 31 to 34 with operator's finger via the electrically insulating sheet 4, or moves the finger on the electrically insulating sheet 4.

In the rim member 2, the ring-shaped protrusion part 21 which forms the sensitive operation area 10 is provided with a slope face 22 (a tapered face) which is continuous to the sensitive operation area 10. The slope face 22 is upgrade toward the outer peripheral side.

In the sensitive operation unit A, when the operator puts a finger F on the electrically insulating sheet 4 in the center portion of the electrode plate 3, the finger F overlaps the four electrode faces 31 to 34 via the electrically insulating sheet 4. In addition, the area of the sensitive operation area 10 is sufficiently large for ensuring for the finger F some allowance for movement around the finger F which is put in the center portion of the electrode plate 3.

The electrically insulating sheet 4 is an example of the electrically insulating layer. Preferably, for example, a polyethylene sheet can be used as the electrically insulating sheet 4. As the electrically insulating layer, it is possible to use an electrically insulating coating film which is applied to and formed on the surface of the electrode plate 3 so as to cover the electrode faces 31 to 34.

In the thus configured sensitive operation unit A of the sensitive coordinate input device, as shown in Fig. 2, predetermined two electrode faces 31 and 33 at alternate positions are assigned a plus coordinate and a minus coordinate, respectively, in the X-axis direction of the display screen. The remaining two electrode faces 32 and 34 are assigned a plus coordinate and a minus coordinate, respectively, in the Y-axis direction of the display screen. The center portion O of the electrode plate 3 in which the four electrode faces 31 to 34 are butted each other is assigned an origin, i.e., the coordinates [0, 0].

With this construction, when the finger F of the operator is put on the electrode plate 3 via the electrically insulating sheet 4 as shown in Fig. 3, electrostatic capacitances between the operator's finger F and the electrode faces 31 to 34 are varied depending on the overlap areas of the finger over the respective electrode faces 31 to 34. Accordingly, by synthesizing the signals output from the individual electrode faces 31 to 34 when a finger is put thereon, a cursor can be moved on the display screen in the X-axis and Y-axis directions.

In the case where the operator puts the operator's finger F on the electrically insulating sheet 4 and moves the finger in a direction in which the operator wants to move the cursor, when the finger F hits the protrusion part 21 of the rim member 2, the operator can sensorially recognize that the position is the edge position of the sensitive operation area 10. This structure allows the operator to desirably move the cursor on the display screen by moving the finger F in the sensitive operation area 10 in a desired direction without requiring the operator to see the sensitive operation area 10.

In the case where the operator repeatedly and continuously drags the finger F within the sensitive operation area 10 so as to move the cursor on the display screen in a wide range, the finger F is moved so as to draw an oval path. In the embodiment, the rim member 2 is provided with the slope face 22 which is continuous to the sensitive operation area 10 and upgrade toward the outer peripheral side, so that the repetitive movement of the finger F is easily attained with the aid of the slope face 22. Moreover, the rim member 2 is useful for preventing the finger F from slipping off from the sensitive operation area 10 during the operation in which the operator performs the operation without seeing the input device, i.e., during a so-called blind sensitive operation.

Since the sensitive operation area 10 has an area which is sufficiently large for allowing the finger F to be moved, it is easy to widen the range in which the cursor is moved on the display screen by moving the finger F, and it is easy to move the cursor by a small distance on the display screen by pressing the electrically insulating layer 4 with the finger F or by tilting the finger F on the electrically insulating layer 4 so as to change the above-mentioned overlap area.

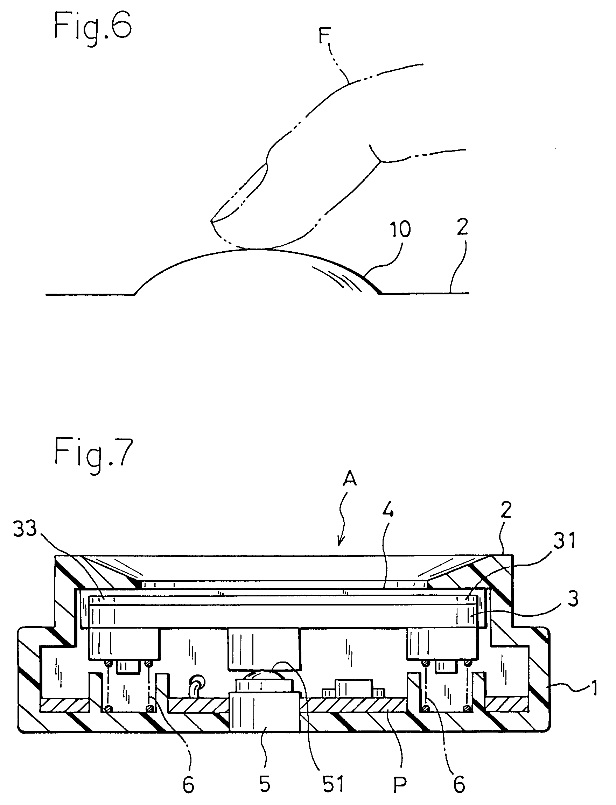

A second embodiment will be described with reference to Fig. 7. The second embodiment utilizes the fundamental structure of the sensitive operation unit A which has been described in the first embodiment, and the sensitive operation unit A is provided with a pointer function.

In the second embodiment, the case 1 incorporates a wiring board P on which various electric components and electronic components for forming required circuits such as a signal synthesizing circuit, and an output circuit, and a depression open/close type switch 5. The connection condition of the switch 5 is alternatingly switched over between the open state and the close state by each depression of an operation portion 51. The electrode plate 3 which is covered by the electrically insulating sheet 4 can be depressed into and restored from the inside of the rim member 2 with respect to the case 1, and the electrode plate 3 is always elastically urged in the restoring direction by means of a spring 6. The depression and restoring operations of the operation portion 51 of the switch 5 are interlocked with those of the electrode plate 3.

According to the second embodiment, when the finger is moved on the electrically insulating sheet 4 and the electrode plate 3 is then depressed by this finger, the operation portion 51 of the switch 5 is depressed in a manner interlocked with the depression operation, so that the open/close state of the switch 5 is switched over. Thus, the sensitive operation unit A is provided with a pointer function by which the determining operation of the cursor position on the display screen can be performed directly by the finger which is now used for controlling the movement of the cursor.

The other constructions and functions of the sensitive operation unit A shown in Fig. 7 are the same as those described in the first embodiment. Therefore, identical reference numerals are used for designating identical components, and their detailed description is omitted.

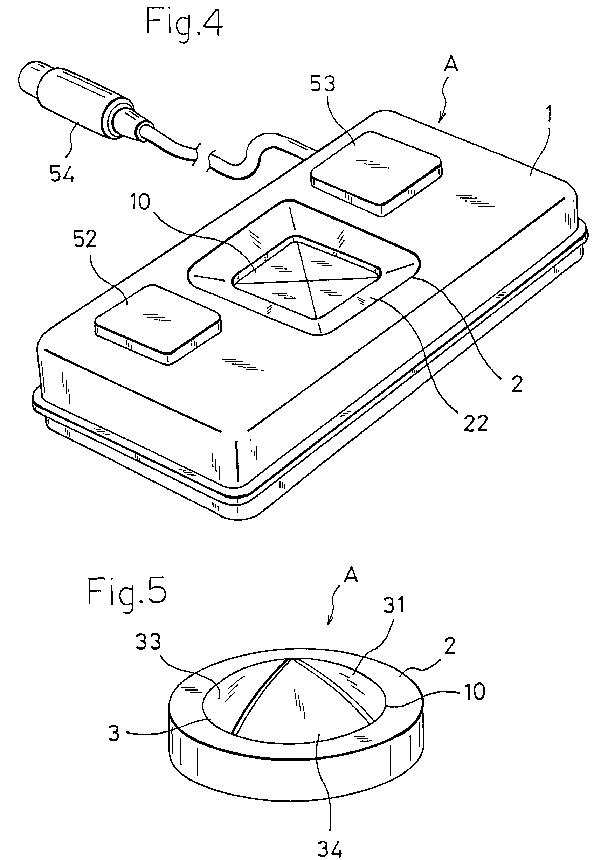

A third embodiment will be described with reference to Fig. 4.

The sensitive operation unit A of the third embodiment comprises a case 1 which takes a rectangular parallelepiped form for enabling the operator to hold the device with hands. A square sensitive operation area 10 is formed by a rim member 2 which is formed as a part of the case 1. On the sides of the sensitive operation area 10, a push button 52 for a cancel switch, and a push button 53 for a determination switch are disposed, respectively. Such a sensitive operation unit A is preferably used for, for example, video games. The reference numeral 54 designates a plug for interface. The other constructions and functions of the sensitive operation unit A shown in Fig.4 are the same as those described in the first embodiment.

A fourth embodiment will be described with reference to Figs. 5 and 6.

In the sensitive operation unit A shown in these figures, the surface of an electrode plate 3 including four electrode faces 31 to 34 (the electrode face 32 is not shown) is protruded from the peripheral portion to the center portion, so as to have a dome shape. A rim member 2 forms a circular sensitive operation area 10. The other constructions, for example, the construction wherein the electrode plate comprises four plates which are separated in a circumferential direction and electrically insulated from each other, that wherein the electrode faces are arranged so as to be butted each other in the center portion (the top portion) of the electrode plate 3, and that wherein an electrically insulating sheet is overlaid on the electrode plate 3 so as to cover the four electrode faces are the same as those of the first embodiment.

According to the sensitive operation unit A, the top point of the electrode plate 3 which is protruded in a dome shape is assigned an origin of coordinates, so that the origin can readily be recognized by an operator's finger F. In addition, when the finger hits the rim member 2, the operator can readily recognize the limit edge of the sensitive operation area 10. The other constructions and functions of the sensitive operation unit A shown in Figs. 5 and 6 are the same as those described in the first embodiment.

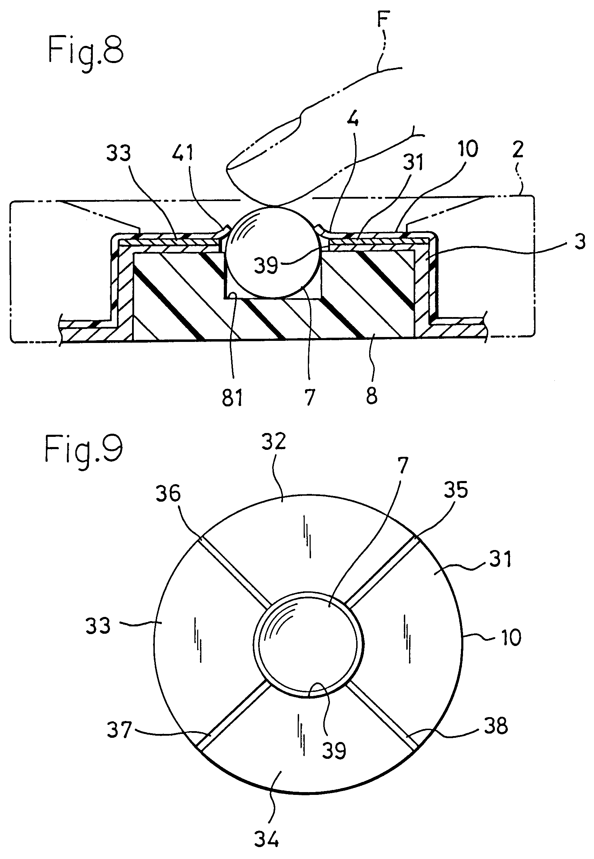

A fifth embodiment will be described with reference to Figs. 8 and 9.

In the fifth embodiment, a sphere 7 is rotatably held in a recess portion 81 which is formed in a base member 8 made of a synthetic resin molded body. An electrode plate 3 has an opening 39 in the center portion thereof. The opening 39 is fitted to the sphere 7, so that a part of the sphere 7 is protruded on the surface side. Four electrode faces 31 to 34 which are separated in a circumferential direction and electrically insulated from each other are arranged so as to be butted each other at the periphery of the opening. An electrically insulating sheet 4 has a circular opening in the center portion thereof. The circular opening has a diameter which is smaller than that of the sphere 7. The electrically insulating sheet 4 is overlaid on the electrode plate 3 so as to cover the four electrode faces 31 to 34, and the surface of the electrically insulating sheet 4 is to be touched with the operator's finger F. The circular opening having the diameter which is smaller than that of the sphere 7 is fitted to the sphere 7. Accordingly, a peripheral portion 41 of the opening of the electrically insulating sheet 4 overlaps the surface of the sphere 7, so that the sphere 7 is prevented from falling out of the recess portion 81 of the base member 8 by utilizing the nerve (the deflection rigidity) of the sheet 4 when it is deflected. As the electrically insulating sheet 4, a synthetic resin sheet which has a certain degree of nerve, but has not so large deflection rigidity is used, so that the revolution of the sphere 7 is smoothly performed although the peripheral portion 41 of the opening of the electrically insulating sheet 4 overlaps the sphere 7.

In the sensitive operation unit A, if required, a rim member 2 may be provided for forming a sensitive operation area 10 of the four electrode faces 31 to 34 in the peripheral portion of the electrode plate 3, and the rim member 2 may be provided with a slope face 22 which is upgrade toward the outer peripheral side and continuous to the sensitive operation area 10, as shown by phantom lines in Fig. 8.

According to the fifth embodiment, when the finger F is moved for rotating the sphere 7, the operation naturally results in the movement of the finger on the electrically insulating sheet 4. Moreover, the sphere 7 is rotated by the movement of the finger F, so that the operation for moving the finger F in a limited small area can be smoothly and easily performed. Since the sphere 7 is protruded from the opening of the electrically insulating sheet 4, the origin of coordinates can be recognized by sensorially recognizing the sphere 7 with the finger F. The operation for rotating the sphere 7 with the finger F is the same as the ball rotating operation for a track ball which is generally used in the prior art as a coordinate input device, so that the fifth embodiment provides an operator who usually uses a track ball with an advantage that the operation of the sensitive operation unit A is not unfamiliar.

In the sensitive operation units A of the embodiments described above, for example, an AC voltage of 125 kHz is applied to each of the four electrode faces 31 to 34. In such a case, when the operator's finger F is put on the electrode faces 31 to 34 via the electrically insulating sheet 4, voltages of the individual electrode faces 31 to 34 are changed depending on the areas of the electrode faces 31 to 34 covered by the finger F. The voltages are taken out of the electrode faces 31 to 34 as signals, and the signals are processed by a so-called microcomputer, whereby the movement of the cursor on the display screen is caused to follow the movement of the finger F. In this case, for example, the changes of voltages at the electrode faces 31 to 34 are read by a sampling rate of 50 msec, and the position of the cursor corresponding to the X and Y coordinates on the display screen which reflect the movement of the finger F is calculated. Based on the calculated cursor position, the cursor can be moved. When such a control method is employed, for example in the sensitive operation unit A of the first embodiment described with reference to Fig. 1, the sensitive operation area 10 may have an area approximately equal to that of the Japanese 1-yen coin (the diameter is about 20 mm). Even in such a case, the resolutions of 100 to 150 counts in both the X-axis and Y-axis directions can be attained. Thus, the cursor moving range can be made very wide without requiring for the operator to largely move the finger.

## Claims

1. A sensitive operation unit for a sensitive coordinate input device comprising: an electrode plate having four electrode faces which are separated in a circumferential direction and electrically insulated from each other, said electrode faces being butted each other in a center portion of said electrode plate; an electrically insulting layer overlaid on said electrode plate so as to cover said four electrode faces, a surface of said electrically insulating layer being to be touched with a finger of an operator; and a rim member provided with a slope face which forms a sensitive operation area of said four electrode faces in a peripheral portion of said electrode plate on which said electrically insulating layer is overlaid, said slope face being upgrade toward an outer peripheral side and being continuous to said sensitive operation area.

2. A sensitive operation unit for a sensitive coordinate input device according to claim 1, wherein said rim member is protruded from a case having a wiring board on which various electric components and electronic components are mounted.

3. A sensitive operation unit for a sensitive coordinate input device according to claim 1, wherein said four electrode faces are butted each other so that, when the operator puts the finger on the center portion of said electrode plate having said four electrode faces, the finger overlaps said four electrode faces via said electrically insulating layer, and said sensitive operation area is formed in a size enabling an extra area to be formed around the finger for allowing the finger to move.

4. A sensitive operation unit for a sensitive coordinate input device according to claim 1, wherein a case to which said rim member is provided incorporates a wiring board on which various electric components and electronic components are mounted, and a depression open/close switch, a connection condition of said switch being alternatingly switched over between an open state and a close state by each depression of an operation portion, and said electrode plate covered by said electrically insulating layer is accommodated in said case in a state where said electrode plate is capable of being depressed into and restored from the depression with respect to said case and always elastically urged along a restoring direction, depression and restoring operations of said operation portion of said switch being interlocked with depression and restoring operations of said electrode plate.

5. A sensitive operation unit for a sensitive coordinate input device comprising: an electrode plate having four electrode faces which are separated in a circumferential direction and electrically insulated from each other, said electrode faces being butted each other in a center portion of said electrode plate, a surface of said electrode plate being protruded in a dome shape from a peripheral portion to the center portion thereof, together with said four electrode faces; an electrically insulting layer overlaid on said electrode plate so as to cover said four electrode faces, a surface of said electrically insulating layer being to be touched with a finger of an operator; and a rim member which forms a sensitive operation area of said four electrode faces in the peripheral portion of said electrode plate on which said electrically insulating layer is overlaid.

6. A sensitive operation unit for a sensitive coordinate input device according to claim 5, wherein said four electrode faces are butted each other so that, when the operator puts the finger on the center portion of said electrode plate having said four electrode faces, the finger overlaps said four electrode faces via said electrically insulating layer, and said sensitive operation area is in a size enabling an extra area to be formed around the finger for allowing the finger to move.

7. A sensitive operation unit for a sensitive coordinate input device according to claim 5, wherein a case to which said rim member is provided incorporates a wiring board on which various electric components and electronic components are mounted, and a depression open/close switch, a connection condition of said switch being alternatingly switched over between an open state and a close state by each depression of an operation portion, and said electrode plate covered by said electrically insulating layer is accommodated in said case in a state where said electrode plate is capable of being depressed into and restored from the depression with respect to said case and always elastically urged along a restoring direction, depression and restoring operations of said operation portion of said switch being interlocked with depression and restoring operations of said electrode plate.

8. A sensitive operation unit for a sensitive coordinate input device comprising: a sphere which is rotatably held in a base member; an electrode plate having an opening which is fitted to said sphere to protrude a part of said sphere on a surface side, said electrode plate having four electrode faces which are separated in a circumferential direction and electrically insulated from each other, said electrode faces being butted each other in a periphery of said opening; and an electrically insulting layer having an opening which is fitted to said sphere to protrude a part of said sphere on the surface side, said electrically insulating layer being overlaid on said electrode plate so as to cover said four electrode faces, a surface of said electrically insulating layer being to be touched with a finger of an operator.

9. A sensitive operation unit for a sensitive coordinate input device according to claim 8, wherein a peripheral portion of said opening of said electrically insulating layer which is fitted to said sphere overlaps a surface of said sphere.

10. A sensitive operation unit for a sensitive coordinate input device according to claim 9, further comprising a rim member for forming a sensitive operation area of said four electrode faces in a peripheral portion of said electrode plate which is covered by said electrically insulating layer.

11. A sensitive operation unit for a sensitive coordinate input device according to claim 10, wherein said rim member has a slope face which is upgrade toward an outer peripheral side and is continuous to said sensitive operation area.
